# EUROPÄISCHE PATENTSCHRIFT

(11) **EP 0 486 424 B1**
(45) Veröffentlichungstag und Bekanntmachung des Hinweises auf die Patenterteilung: **08.06.1994**
(21) Anmeldenummer: 91810817.6
(22) Anmeldetag: 23.10.1991
(51) Int. Cl.: B65G 65/46

(54) **Dosiervorrichtung zum Abgeben eines Schüttgutes**
Metering apparatus for delivery of a bulk material
Appareil de dosage pour la distribution d'une matière en vrac

(30) Priorität: 13.11.1990 CH 3593/90
(43) Veröffentlichungstag der Anmeldung: 20.05.1992
(73) Patentinhaber: K-TRON TECHNOLOGIES, INC., Wilmington, DE 19801 (US)
(72) Erfinder: Rohr, Marcel, CH-5502 Hunzenschwil (CH)
(74) Vertreter: Salgo, Reinhold Caspar, Dr.

(56) Entgegenhaltungen:
- EP-A- 0 049 315
- EP-A- 0 380 446
- FR-A- 2 635 314
- US-A- 4 723 614

## Beschreibung

Zum dosierten Abgeben eines Schüttgutes, wie z.B. eines Farbpulvers, sind Dosiervorrichtungen bekannt (z.B. EP-A-380 446), die einen Schüttgutbehälter, eine Ausgabevorrichtung mit dem dazugehörigen Antrieb und eine Waage aufweisen sowie eine durch die Waage und eine Eingabevorrichtung steuerbare elektronische Schaltung, die als Steuervorrichtung dazu dient, eine einstellbare Abgabeleistung über eine bestimmte oder unbestimmte Zeit konstant zu halten oder die Abgabe stets gleicher Portionen zu gewährleisten oder jede mögliche Kombination zwischen Abgabeleistung und Einzel- oder Totalabgabe zu steuern.

Derartige Dosiervorrichtungen haben sich an den vielen Orten, wo sie in Gebrauch stehen, an sich sehr bewährt. Wegen der hohen Ansprüche an die Präzision, mit der sie arbeiten, sind solche Geräte sehr teuer. Dies wiederum hat zur Folge, dass man nicht für jedes Produkt, das während einer gewissen Zeit dosiert werden muss, ein spezielles Gerät anschaffen kann, sondern die vorhandenen Geräte für die verschiedensten Produkte benützen muss. Dies ist allerdings nur möglich, wenn die Geräte nach jeder Benützung mit grösster Sorgfalt gereinigt werden. Je nach der Art des zu dosierenden Produkts kann nun der Reinigungsaufwand sehr gross sein, sodass sich oft die Frage stellt, ob trotz der hohen Kosten die Anschaffung eines oder sogar mehrerer zusätzlicher Geräte ins Auge gefasst werden muss.

Der Lösung dieses Problems dient nun die vorliegende Erfindung. Sie betrifft nämlich eine Dosiervorrichtung der eingangs genannten Art, die dadurch gekennzeichnet ist, dass der Schüttgutbehälter und die Ausgabevorrichtung eine derart zusammengesetzte Baueinheit bilden, dass sie als Ganzes von den übrigen voneinander nicht getrennten Teilen lösbar sind. So ist es möglich, für jedes zu dosierende Schüttgut eine aus Schüttgutbehälter und Ausgabevorrichtung zusammengesetzte Baueinheit anzuschaffen, die sich einerseits als Vorratsbehälter zum Aufbewahren des betreffenden Schüttgutes verwenden und andererseits für die dosierte Abgabe des Schüttgutes auf das den kostspieligen Teil der Dosiervorrichtung bildende Basiselement aufsetzen lässt, das mindestens aus der Waage, der elektronischen Steuerung und dem Antrieb für die Ausgabevorrichtung besteht. Eine derartige Baueinheit, die je nach Bedarf auch mit einem Rührwerk zum Umrühren des im Schüttgutbehälter vorhandenen Schüttgutes versehen sein kann, muss nach dem Wegnehmen vom Basiselement nicht entleert und gereinigt werden, sondern kann je nach Bedarf mit oder ohne Deckel als Aufbewahrungsbehälter für das betreffende Schüttgut dienen, also beispielsweise für einen schwarzen Farbstoff oder für einen weissen Farbstoff. Falls der Behälter aber entleert wird, braucht er nicht speziell gereinigt zu werden, falls beabsichtigt ist, ihn später für gleiches Schüttgut wieder zu verwenden. Eine besonders einfache Konstruktion lässt sich dadurch erreichen, dass man als Ausgabevorrichtung einen Schneckenförderer verwendet, also eine Vorrichtung mit einer Förderschnecke, die in einem unverdrehbar angebrachten, mit einer Einfüllöffnung versehenen Rohr drehbar gelagert ist, wobei der Schüttgutbehälter mit dem Rohr oder einem das Rohr umgebenden Gehäuse fest verbunden ist und in dessen Einfüllöffnung mündet.

Es ist nun bereits eine Vorrichtung zur Abgabe von Schüttgut bekannt (FR-A-2 635 314), die aus vier zusammensteckbaren Teilen aufgebaut und in diese vier Teile zerlegbar ist: Es sind das ein Gestell, ein Antriebsmotor, eine Ausgabeeinheit und ein Trichter, wobei verschiedene Ausgabeeinheiten, nämlich ein Rüttler, ein Schneckenförderer mit einer Schnecke und ein Schneckenförderer mit einer Doppelschnecke wahlweise zur Verfügung stehen. Wesentlich bei dieser bekannten Vorrichtung ist die Auswechselbarkeit der zwischen Antrieb und Vorratsbehälter einzusetzenden Ausgabeeinheit. Mit dieser bekannten Konstruktion wurde die Aufgabe gelöst, eine universell verwendbare Abgabevorrichtung mit eher bescheidener Abgabepräzision zur Verfügung zu stellen, bei welcher die auswechselbaren Teile, wenn sie nicht gebraucht werden, verhältnismässig wenig Raum beanspruchen. Als Vorratsbehälter lässt sich der Trichter nicht gebrauchen, einerseits weil er unten offen und dazu konstruiert ist, auf die verschiedenen Ausgabeeinheiten aufgesetzt zu werden, und andererseits, weil er gerade deswegen nur in einem einzigen Exemplar zur Verfügung steht.

Demgegenüber dient nun die vorliegende Erfindung der Lösung eines Problems, das im wesentlichen bei Präzisionsgeräten wichtig ist, nämlich der Möglichkeit, ohne kostspielige Reinigungsprozesse die an sich teuren Teile, nämlich die Präzisionswaage und die Steuervorrichtungen für die Ausgabe verschiedenster gleichartiger Stoffe zu verwenden und sogar so, dass die Stoffe zur Verarbeitung in der Vorrichtung gar nicht umgeschüttet werden müssen.

Nachfolgend wird anhand der beiliegenden Zeichnung ein Ausführungsbeispiel der Erfindung beschrieben. In der Zeichnung zeigt
die Figur 1 eine perspektivische Darstellung einer erfindungsgemässen Dosiervorrichtung,
die Figur 2 eine perspektivische Darstellung des mit der Ausgabevorrichtung zusammengebauten Schüttgutbehälters,
die Figur 3 eine Seitenansicht der ganzen Vorrichtung,
die Figur 4 eine Ansicht der Rückseite der ganzen Vorrichtung,
die Figur 5 eine Seitenansicht der Vorrichtung ohne Behälter und Ausgabevorrichtung,
die Figur 6 eine Ansicht der Rückseite der Vorrichtung ohne Behälter und Ausgabevorrichtung,
die Figur 7 eine Ansicht der Rückseite des mit der Ausgabevorrichtung zusammengebauten Schüttgutbehälters,
die Figur 8 eine Seitenansicht des Gehäuses der Ausgabevorrichtung,
die Figur 9 die Stirnansicht dieses Gehäuses, gesehen in Richtung des Pfeiles IX in der Figur 8,
die Figur 10 einen Schnitt nach der Linie X - X der Figur 8, jedoch mit eingesetztem Schneckenförderer und
die Figur 11 einen Vertikalschnitt nach der Linie XI - XI
der Figur 12, die eine Draufsicht auf die Grundplatte der Vorrichtung darstellt.

Die in der Zeichnung dargestellte Dosiervorrichtung enthält eine Waage, deren lastaufnehmende Waageplatte mit 1 bezeichnet ist. Sie bildet den Deckel des mit ihr fest verbundenen Behälters 2, in welchem die auf die Belastung ansprechenden Bauteile sowie die ganze elektronische Steuervorrichtung untergebracht sind, wie das in der EP-B-035 579 dargestellt und beschrieben ist. Die bei solchen Waagen übliche Digitalanzeige und die Eingabe-Tastatur können in einem Fenster des Gehäuses angeordnet sein oder in einem durch ein Kabel mit diesem Behälter 2 verbundenen Steuer- und Anzeigegehäuse.

Auf der Waageplatte 1 liegt die Grundplatte 3 der Vorrichtung, die mit ihr durch Schrauben 4 fest verbunden ist. Fest mit dieser Grundplatte ist nun die Motorenhalterplatte 5 verschraubt, an welcher zwei je mit einem Untersetzungsgetriebe 6 bzw. 7 ausgerüstete Motoren 8 und 9 befestigt sind. Der mit 8 bezeichnete Motor ist der Rührwerksmotor, der mit 9 bezeichnete Motor ist der Schneckenantriebsmotor. Jedes der beiden Getriebe 6 und 7 weist auf seiner Antriebswelle 6a bzw. 7a ein Zahnrad auf, von denen das eine mit 10 und das andere mit 11 bezeichnet ist.

Als Schüttgutbehälter dient ein grosser Trichter 12, dessen unteres Ende mit einer Ausgabevorrichtung versehen ist. Als Ausgabevorrichtung dient hier ein in einem Schneckengehäuse 13 eingesetzter Schneckenförderer mit einer horizontalachsigen Förderschnecke 14 und einem die Schnecke mindestens teilweise umgebenden, unverdrehbar angeordneten Rohr 15, wie das im Detail in der EP-A-475 909 dargestellt und beschrieben ist.

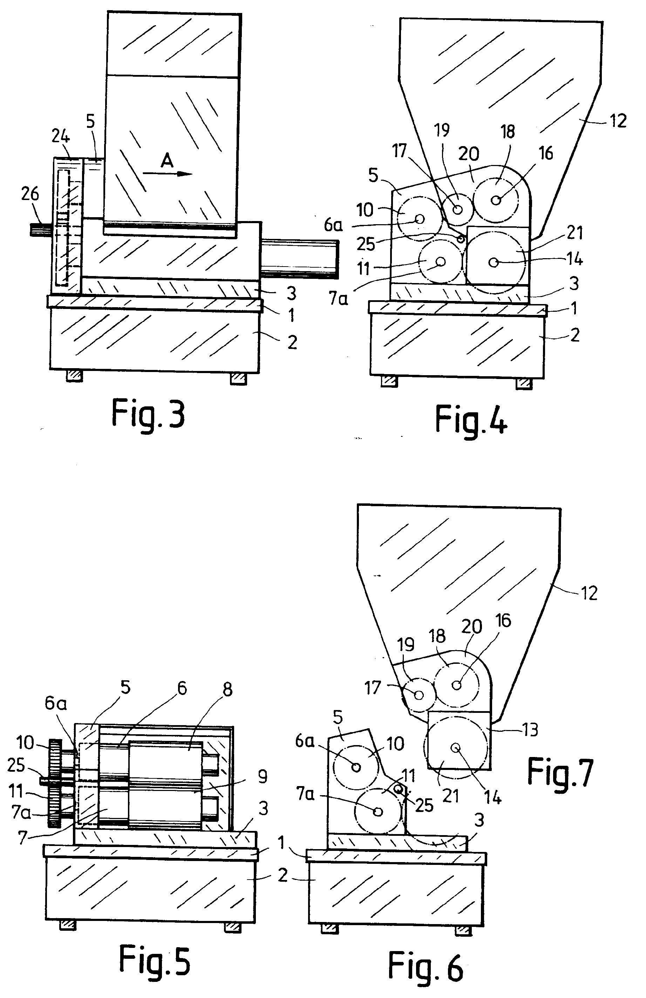

Im untern Bereich des Schüttgutbehälters, also in der Nähe der in die Eintrittsöffnung 13a des Schneckengehäuses 13 mündenden Auslauföffnung ist ein Rührwerk mit zwei horizontalachsigen, in der Rührwerksplatte 20 gelagerten Rührern zum Umrühren des im Schüttgutbehälter vorhandenen Schüttgutes eingebaut, dessen Wellen mit 16 und 17 bezeichnet sind. Auf jeder dieser Wellen sitzt aussen ein mit 18 bzw. 19 bezeichnetes Zahnrad, die beide miteinander kämmen. Wie aus der Figur 4 ersichtlich ist, kämmt das Zahnrad 19 auch mit dem Zahnrad 10, das auf der Abgangswelle 6a des mit dem Rührwerksmotor 8 zusammengebauten und von ihm angetriebenen Getriebes 6 sitzt, sodass die beiden Wellen 16 und 17 des Rührwerks durch den Rührwerksmotor 8 gegenläufig angetrieben werden.

Auf dem freien Ende der Schnecke 14 sitzt das Zahnrad 21, das mit dem Zahnrad 11 kämmt, welches auf der Abgangswelle 7a des mit dem Antriebsmotor 9 zusammengebauten und von ihm angetriebenen Getriebes 7 sitzt, sodass durch den Antriebsmotor 9 die Ausgabevorrichtung betätigt wird.

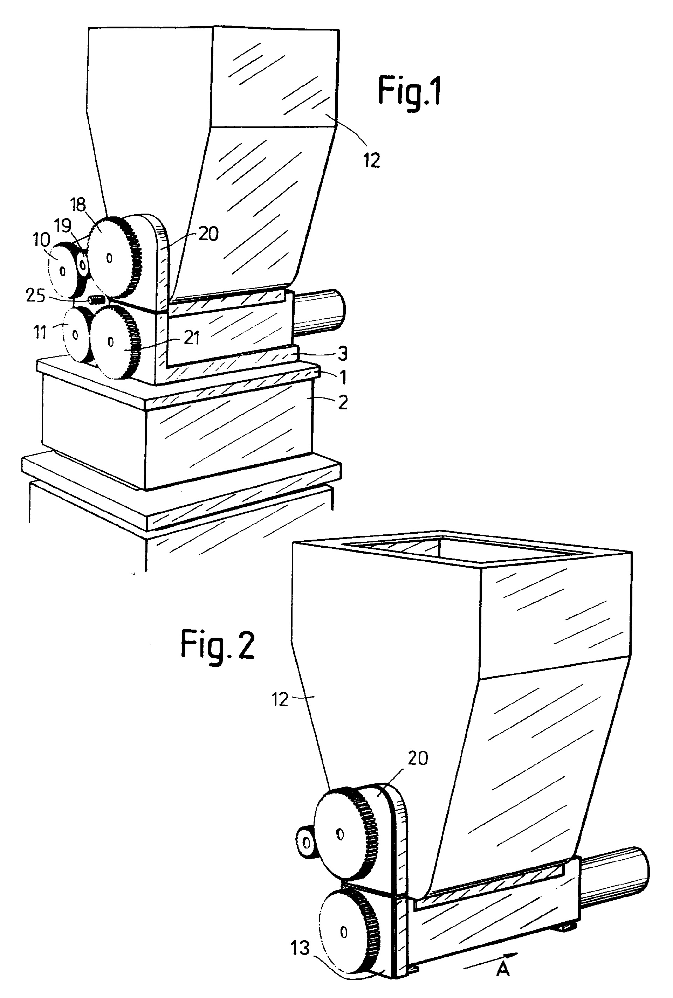

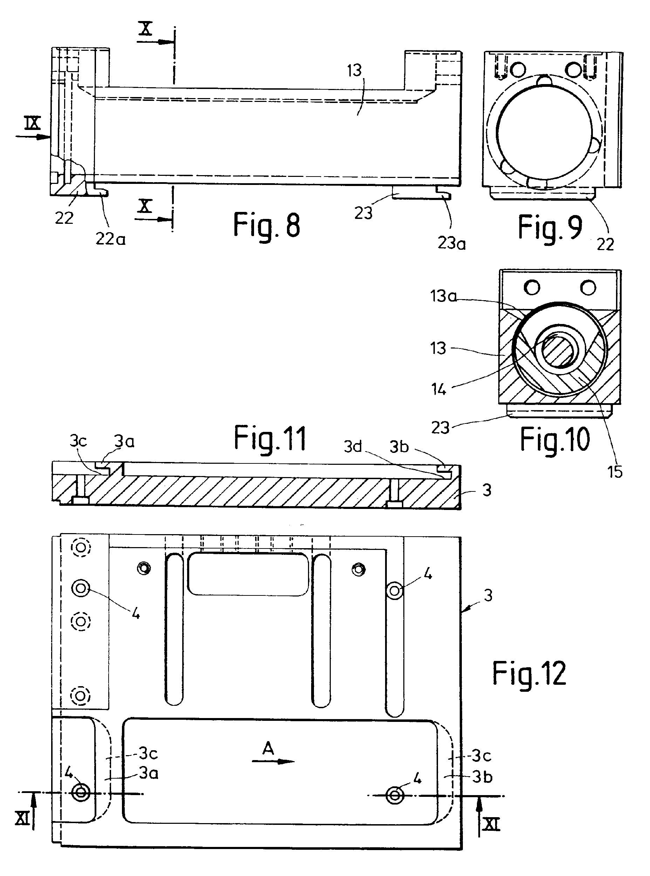

Das wesentlich Neue und Erfinderische der in der Zeichnung dargestellten Vorrichtung besteht nun darin, dass der trichterartige Schüttgutbehälter 12 mit dem Schneckengehäuse 13, in welchem der als Ausgabevorrichtung dienende Schneckenförderer untergebracht ist, eine zusammengesetzte Baueinheit bildet, die als Ganzes, wie das aus der Figur 7 ersichtlich ist, von den übrigen nicht getrennten, in der Figur 6 dargestellten Teilen lösbar ist. Zu diesem Zweck ist, wie man aus den Fig. 8 bis 12 ersehen kann, die Unterseite des Schneckengehäuses 13 mit zwei Gleitschuhen 22 und 23 versehen, deren vorspringende Nasen 22a bzw. 23a in die durch die Rippen 3a bzw. 3b überdeckten Ausnehmungen 3c bzw. 3d der Grundplatte 3 passen, sodass sich die zusammengesetzte, in der Figur 7 dargestellte Baueinheit auf die Grundplatte 3 aufsetzen und durch achsparalleles Verschieben in Richtung des in den Figuren 2, 3 und 12 eingezeichneten Pfeiles A, also in der Richtung parallel zu den Achsen der Getriebe 6 und 7 sowie ihrer Abgangswellen 6a und 7a, so positionieren lässt, wie das in den Fig. 1, 3 und 4 dargestellt ist. In dieser Stellung, in welcher die aufgeschobene Baueinheit durch die mittels einer auf dem Gewindebolzen 25 aufgeschraubten Mutter 26 festgehaltenen Getriebe-Schutzdeckel 24 gegen eine Verschiebung entgegen der Richtung des Pfeiles A oder durch irgendein anderes Hilfsmittel, wie einen Arretierstift oder durch eine selbständig einrastende Feder gesichert wird, kämmt das Zahnrad 19 mit dem Zahnrad 10 und das Zahnrad 21 mit dem Zahnrad 11, sodass die ganze Vorrichtung im vorstehend beschriebenen Betriebszustand ist. In diesem Zustand kann also das in den Schüttgutbehälter 12 eingefüllte Schüttgut gemäss dem Steuerprogramm der elektronischen Steuervorrichtung, die auf an sich bekannte Art und Weise die Ausgabevorrichtung steuert, mit der gewünschten Ausgabegeschwindigkeit ausgegeben werden. Nach Beendigung des Ausgabeprozesses, der durch die Steuervorrichtung oder durch eine Handschaltung beendigt werden kann, kann man nach dem Wegschrauben der Mutter 26 vom Gewindebolzen 25 den Schutzdeckel 24 entfernen und dann die vorher aufgesetzte Baueinheit durch Verschieben entgegen der Richtung des Pfeiles A wieder wegnehmen und mit dem Rest des darin befindlichen Schüttgutes magazinieren. Wenn die Dosiervorrichtung nun zum Abgeben eines andern Produktes benötigt wird, wird eine andere gleich ausgebildete Baueinheit, die also ebenfalls aus Schüttgutbehälter und Ausgabevorrichtung gebildet ist und gewünschtenfalls auch einen Deckel aufweisen kann, in der vorstehend beschriebenen Art und Weise aufgesetzt und damit wird wieder eine betriebsbereite Dosiervorrichtung erhalten. Da die Kosten für den Schüttgutbehälter und die Ausgabevorrichtung verhältnismässig klein bezogen auf den Preis einer vollständigen Dosiervorrichtung sind und da sich die derart gebildete Baueinheit dann, wenn sie nicht mit der Basiseinheit zusammengesetzt ist, als Aufbewahrungseinheit, also als Vorratsbehälter für das Schüttgut verwenden lässt, lohnt es sich, für jedes öfters zu verarbeitende Schüttgut eine spezielle Baueinheit anzuschaffen. So ist man sicher, dass das zu verarbeitende Schüttgut nicht durch ein anderes Schüttgut verunreinigt wird. Für Schüttgüter, die gute Rieseleigenschaften und keine Neigung zum Zusammenpappen besitzen, kann man selbstverständlich eine Baueinheit ohne Rührwerk, also Baueinheiten etwas einfacherer Konstruktion verwenden.

Selbstverständlich kann man nicht nur für das Festhalten der Baueinheit auf der Unterlage sondern auch anstelle der anhand der Figuren 8, 11 und 12 beschriebenen Hilfsmittel zum richtigen Positionieren der Baueinheit auf der Waageplatte anders konstruierte Hilfsmittel verwenden.

## Patentansprüche

1. Zum dosierten Abgeben eines Schüttgutes dienende Dosiervorrichtung mit einem Schüttgutbehälter (12), einer Ausgabevorrichtung (13, 14, 15), einem Antrieb (7, 9, 11) für die Ausgabevorrichtung, einer Waage (1, 2) und einer elektronischen Steuervorrichtung, dadurch gekennzeichnet, dass der Schüttgutbehälter (12) und die Ausgabevorrichtung (13, 14, 15) eine derart zusammengesetzte Baueinheit bilden, dass sie als Ganzes von den übrigen voneinander nicht getrennten Teilen lösbar sind.

2. Dosiervorrichtung nach Anspruch 1, dadurch gekennzeichnet, dass die Ausgabevorrichtung durch einen Schneckenförderer (14, 15) mit einem unverdrehbar angeordneten, mit einer Einfüllöffnung versehenen Rohr (15) und einer im Rohr (15) drehbar gelagerten Förderschnecke (14) gebildet wird, wobei der Schüttgutbehälter (12) mit dem Rohr (15) oder einem das Rohr (15) umgebenden Gehäuse (13) fest verbunden ist und in dessen Einfüllöffnung mündet.

3. Dosiervorrichtung nach Anspruch 1 oder 2, gekennzeichnet durch zwei zur Übertragung der Antriebsenergie vom Antrieb (7, 9) auf die Ausgabevorrichtung (14, 15) miteinander kämmende Zahnräder (11, 21) von denen eines (11) fest mit dem Antrieb (7, 9) und das andere (21) fest mit der Ausgabevorrichtung (14, 15) verbunden ist.

4. Dosiervorrichtung nach einem der Ansprüche 1 bis 3 mit einem im Schüttgutbehälter (12) angeordneten Rührwerk und einem Antriebsmotor (8) für dieses Rührwerk, gekennzeichnet durch zwei im Betriebszustand miteinander kämmende Zahnräder (10, 19), von denen eines (10) mit dem Motor (8) oder einem von ihm angetriebenen Getriebe (6) und das andere (19) mit dem Rührwerk drehfest verbunden ist, das Ganze derart, dass das Rührwerk und das mit ihm verbundene Zahnrad einen Bestandteil der von den übrigen Teilen lösbaren Baueinheit bilden.

## Revendications

1. Dispositif doseur servant à la distribution dosée d'un produit en vrac, comprenant un récipient de produit en vrac (12), un distributeur (13, 14, 15), un entraînement (7, 9, 11) pour le distributeur, une balance (1, 2) et un dispositif de commande électronique, caractérisé en ce que le récipient de produit en vrac (12) et le distributeur (13, 14, 15) forment une unité modulaire composée de telle sorte qu'ils peuvent être détachés, en un bloc, des autres éléments non séparés les uns des autres.

2. Dispositif doseur selon la revendication 1, caractérisé en ce que le distributeur est formé par un convoyeur à vis (14, 15) comprenant un tube (15) disposé fixe en rotation et pourvu d'une ouverture de remplissage, et une vis transporteuse (14) montée rotative dans le tube (15), le récipient de produit en vrac (12) étant relié de façon fixe au tube (15) ou à un carter (13) entourant le tube (15), et débouchant dans l'ouverture de remplissage de celui-ci.

3. Dispositif doseur selon la revendication 1 ou 2, caractérisé par deux roues dentées (11, 21) en prise l'une avec l'autre pour transmettre l'énergie d'entraînement de l'entraînement (7, 9) au distributeur (14, 15), l'une (11) étant reliée de façon fixe à l'entraînement (7, 9) tandis que l'autre (21) est reliée de façon fixe au distributeur (14, 15).

4. Dispositif doseur selon l'une des revendications 1 à 3, comprenant un mécanisme agitateur disposé dans le récipient de produit en vrac (12), et un moteur d'entraînement (8) pour ce mécanisme agitateur, caractérisé par deux roues dentées (10, 19) en prise l'une avec l'autre à l'état de fonctionnement, l'une (10) étant reliée au moteur (8) ou à un mécanisme (6) entraîné par celui-ci, tandis que l'autre (19) est reliée, solidaire en rotation, au mécanisme agitateur, et ce de telle sorte que le mécanisme agitateur et la roue dentée reliée à celui-ci forment partie intégrante de l'unité modulaire apte à être détachée des autres éléments.

## Claims

1. Metering device serving for the metered dispensing of a bulk material, comprising a. bulk material container (12), a dispensing device (13, 14, 15), a drive (7, 9, 11) for the dispensing device, a balance (1, 2) and an electronic control device, characterised thereby that the bulk material container (12) and the dispensing device (13, 14, 15) form a unit assembled in such a manner that they are removable as a whole from the remaining parts not separated from one another.

2. Metering device according to claim 1, characterised thereby that the dispensing device is formed by a screw conveyor (14, 15) with a non-rotatably arranged tube (15) provided with a filling opening, and a feed screw (14) rotatably mounted in the tube (15), wherein the bulk material container (12) is fixedly connected with the tube (15) or a housing surrounding the tube (15) and opens into the filling opening thereof.

3. Metering device according to claim 1 or 2, characterised by two gears (11, 12) of which one (11) is fixedly connected with the drive (7, 9) and the other (21) fixedly connected with the dispensing device (14, 15) and which mesh with another for the transmission of drive energy from the drive (7, 9) to the dispensing device (14, 15).

4. Metering device according to one of claims 1 to 3, comprising a mixer arranged in the bulk material container (12) and a drive motor (8) for this mixer, characterised by two gears (10, 19), of which one (10) is connected with the motor (8), or a transmission (6) driven by it, to be rotationally fast and the other with the mixer to be rotationally fast and which mesh with one another in the operational state, the whole in such a manner that the mixer and the gear connected therewith form a component of the unit removable from the remaining parts.
